# EUROPEAN PATENT APPLICATION

(11) **EP 2 177 109 A2**
(43) Date of publication of application: **21.04.2010**
(21) Application number: 08166595.2
(22) Date of filing: 14.10.2008
(51) Int. Cl.: A23G 3/20, B65B 3/32, B65B 39/00, B65B 43/59

(54) **Method of Co-Filling a Dairy Product and Co-filled Composite Dairy Product**

(71) Applicant: Nestec S.A., 1800 Vevey (CH)
(72) Inventor: Moreau, Jean, 14340, Manerbe (FR); Swertvagher, François, 14100, Courtonne la Meudrac (FR); Delattre, Jean-Marie, 14100, Beuvillers (FR)

(57) **Abstract**

The present invention concerns a method for producing a composite dairy product by co-filling viscous components and obtaining a spiral or spiral-like product aspect. Advantageously, the method does not require rotational movements of filling nozzles for obtaining the product aspect and thus provides a reduction in the overall complexity of the filling equipment. The composite dairy product comprises a container comprising at least one transparent portion, and wherein a viscous component is visible as a substantially discontinuous stretch on said transparent portion of the container.

## Description

### Technical Field

The present invention relates to a dairy product, to a method of filling a container to obtain a dairy product, to a dairy product obtained by the method and to a filling apparatus.

### Background of the Invention

In the alimentary industry, and in particular in the field of viscous dairy products including ice-creams, consumers generally appreciate multi-component servings. For example, chilled desserts having two differently flavoured masses, for example a white and a black chocolate mousse, are appreciated. In yoghurts, it has become common to add a dairy component, the natural yoghurt, separately from a non-dairy component providing a specific flavour, for example, a fruit compote or a flavoured sauce, into the same pot. It is then up to the consumer to either completely mix the components with a spoon or to consume the components partly separately.

The production of composite dairy products necessitates specific filling equipment allowing for co-filling. FR 2708563 discloses a filling unit enabling the co-filling of different viscous components into the same container, wherein the different components are kept and filled separately but simultaneously into the pot. In generally, the different components are filled through a nozzle comprising separate filling channels leading to separate openings, through which the different components can be co-filled into a container.

It has been noted that consumers further appreciate to have a visual impression of the contents of a dairy product before they buy it. In particular in the field of co-filled, composite dairy products, this has led to the production of products with at least a portion of the serving container being transparent, so as to allow for visual inspection. In these cases, the co-filling is accomplished in a way that the consumer can recognise different components of a composite dairy product through the transparent part of the serving container. It is thus important that both components are arranged in a visually appealing manner in the container. To this end, sophisticated co-filling processes were developed, as for example shown in EP 1348340, where a dairy product in a transparent pot is disclosed, with a central component, generally a dairy component providing the bulk of the product, and with a lateral component, which may be a fruit puree, forming lateral stripes visible on the transparent container. In this way, the colour of the lateral component, for example red in case of a fruit puree, informs the consumer of the flavouring of the dairy product and at the same time provides an appetizing product aspect.

EP 1348340 concerns so-called vertical co-filling. Further appealing product dispositions were obtained by arranging two components of a composite product in the form of spirals. Such products are disclosed, for example, in EP 0615692 and are obtained by a rotative co-filling nozzle. Accordingly, during filling, the nozzle performs a vertical raising movement from the bottom to the top of the container, and, at the same time, rotates around its axis.

The rotation of the co-filling nozzle entails a number of technical disadvantages and/or problems. Complex mechanical assemblies comprising several motors, countershafts, clutches, rotative sealing joints are known, which suffer high abrasion and frequent failure malfunction. All in all, the use of rotating co-filling nozzles results in low production efficiency in continuous filling processes. Furthermore, in continuous filling lines, where a production line contains rows of side-by-side arranged containers and rows of side-by-side arranged nozzles corresponding to the number of lines of containers, the equipment necessary for rotating the nozzle needs to be accommodated in relatively little available space. More particularly, the space of each nozzle is limited by the presence of lateral neighbouring nozzles. In addition, the accumulation of many technical elements above the container to be filled requires further efforts for assuring high standard of hygiene. The elements need to be cleaned frequently.

In some co-filling processes, the container situated below the nozzle is rotated instead of the nozzle, as disclosed, for example, in EP 1602579. However, the problems above apply to a large extent also this solution. In particular, for each nozzle of a filling apparatus, a rotating mechanism for rotating a container during co-filling needs to be provided. In typical continuous filling apparatus suitable to transport rows and lines of containers to a row of side-by-side arranged nozzles, a separate rotating mechanisms for each container is necessary.

While products providing a spiral-like aspect of the different components through a transparent part of the serving container were appreciated, it is also found that the aspect of such products looks too regular, giving an impression of an industrial product.

### Problems to be Solved and Summary of Invention

The present invention addresses the problems set out above. In particular, it is an objective to provide a method for producing an appealing composite dairy product.

It is an objective to provide a process of co-filling avoiding the technical complexity of rotating nozzles or cup-holders.

It is further an objective of the present invention to provide composite dairy products providing a visible product aspect of different viscous components across a transparent portion of the container. Preferably, a new aspect for a composite dairy product as a whole is obtained.

In particular, it is a further objective to provide composite products giving a spiral, spiral-like or similar visual impression through said transparent portion of the container with the viscous ingredients visibly being provided not only in layers, but preferably in a raising manner and preferably in the form of discontinuous stretches within the container of the composite product.

It is also an objective to provide a composite dairy product comprising different viscous ingredients, wherein one viscous ingredient is visible through said transparent portion of the serving container as an interrupted stretch and preferably as an up-ward winding stretch.

It is in general an objective to provide a continuous spiral or spiral-like co-filling of the different viscous ingredients while avoiding the use of rotating nozzles or cup-holders.

It is also an objective of the invention to provide a composite product that has at least a partially irregular and/or imperfect product aspect through the transparent portion of the serving container, in which, for example, one component does not form a perfect spiral from the bottom to the top of the product. Accordingly, it is an objective to provide a composite dairy product wherein, when several products are provided in the shelf of a supermarket, said products look slightly different one from the other.

More particularly, it is an objective to provide an aspect of viscous ingredients of a composite product that looks as if filled in a hand-made manner, as if a person had moved a piping bags with viscous components manually.

The objectives above are addressed by providing a method of producing a composite dairy product, by an apparatus for co-filling different viscous components into a container, and by a dairy product as disclosed herein.

Surprisingly, the inventors of the present invention provide a method of providing composite dairy products including ice-creams, wherein different viscous components are co-filled into containers while conducting a relative movement between the nozzle and the container, said relative movement comprising a horizontal component of movement. When the horizontal component of movement is circular and/or elliptical or otherwise a closed movement comprising curves, a spiral-type filling is obtained even in the absence of a rotating movement.

Accordingly, the present invention provides, in a first aspect, a method for producing a dairy product, in particular a method for continuously filling containers with a dairy component, the method comprising the steps of:
- providing a line of containers to be filled;
- providing a nozzle, wherein said nozzle comprises at least two openings so as to allow for co-filling of at least two different viscous components into a container;
- guiding a container in vicinity of the nozzle;
- co-filling at least two different components through said at least two openings of said nozzle into the container; wherein, during co-filling, at least one relative movement between the container and the nozzle is conducted, said at least one relative movement comprising:

- a vertical component of movement, said vertical component of movement being obtained by a movement starting from a first position where said nozzle is in a more proximal position with respect to a bottom of said container and ending in a second position where the nozzle is in a more distant position above the bottom of the container;
- a horizontal component of movement, said horizontal component of movement being obtained by a movement wherein the relative position of an axis z of the nozzle with respect to an axis c of the container is changed by displacement of at least one of said axis.

In a second aspect, the present invention provides a method comprises the steps of:
- providing rows and lines of containers to be filled;
- providing a row of side-by-side arranged nozzles, wherein each nozzle comprises at least two openings so as to allow for co-filling of two different viscous components into an individual container;
- guiding a row of containers in vicinity of a row of said side-by-side arranged nozzles;
- co-filling at least two different viscous components through said at least two openings of each nozzle into each container of a row; wherein, during co-filling, at least one relative movement between each container and the respective nozzle is conducted, said at least one relative movement comprising:

- a vertical component of movement, said vertical component of movement being obtained by a movement starting from a first position where each nozzle is in a more proximal position with respect to a bottom of said respective container and ending in a second position where each nozzle is in a more distant position above the bottom of the respective container;
- a horizontal component of movement, said horizontal component of movement being obtained by a movement wherein the relative position of an axis z of each nozzle with respect to an axis c of each respective container is changed by displacement of at least one of said axis.

In a third aspect, the present invention provides a composite dairy product comprising at least a first and a second viscous component, said first and second viscous components having different colours, wherein said first viscous component is a dairy viscous component and said second viscous component is selected from a dairy viscous component and a non-dairy viscous component, wherein said composed dairy product comprises a container comprising at least one transparent portion, and wherein said second viscous component is visible as a substantially discontinuous stretch on said transparent portion of the container.

In a fourth aspect, the present invention provides an apparatus for co-filling two edible viscous components into a container for providing a composite dairy product, wherein said apparatus comprises at least one nozzle comprising at least two openings for simultaneously co-filling said two viscous components through said nozzle into said container, said apparatus further comprising a line for guiding a line of containers to be filled in a filling relationship with respect to said nozzle, wherein said apparatus is arranged so as to perform at least one relative movement between the container and the nozzle during co-filling of said two viscous components, said at least one relative movement comprising:
- a vertical component of movement, said vertical component of movement being obtained by a movement starting from a first position where said nozzle is in a more proximal position with respect to a bottom of said container and said movement ending in a second position where the nozzle is in a more distant position above the bottom of the container;
- a horizontal component of movement, said horizontal component of movement being obtained by a movement wherein the relative position of an axis z of the nozzle with respect to an axis of the container is changed by displacement.

In a further aspect, the present invention provides composite products obtained by any one of the methods of the present invention.

The present invention addresses the objectives and problems discussed above. In particular, it is surprising that composite products with a spiral form or spiral-like aspect can be obtained with a co-filling nozzle having multiple openings, the nozzle being used in a fixed manner but configured to move in a plane of two axis y, z, in addition to a movement in the vertical direction. The present invention provides an important simplicity in the implementation and maintenance of industrial filling equipment and methods.

### Brief Description of the Drawings

In the figures,

**Figure 1** shows composite dairy products according to the present invention.

**Figure 2** is a schematic illustration showing an industrial, continuous co-filling apparatus according to the invention from above.

**Figure 3** shows a nozzle suitable for co-filling in the method and apparatus according to the present invention.

**Figure 4** is a schematic, perspective illustration of a nozzle and a serving container during co-filling according to the present invention.

**Figures 5 and 6** are schematic top views for illustrating a horizontal component of movement of the nozzle in the method and apparatus of the present invention.

**Figure 7** is a photograph of a group of four composite dairy products produced by the same industrial method. The products, all prepared with the same ingredients and the same quantities, all look slightly differently.

### Detailed Description of the Preferred Embodiments

The present invention concerns a composite dairy product. A "composite dairy product", for the purpose of the present invention, is a product comprising at least two different viscous components, wherein at least one of said viscous components is a dairy component.

A "viscous dairy component", for the purpose of the present invention, is a viscous, edible matter having, as a substantial ingredient, one or more milk and/or milk derived ingredients and in particular milk fat and/or milk protein. In particular, a "viscous dairy component" preferably comprises one or more selected from milk fat, casein, and whey protein. In order to be a dairy product, the milk and/or milk derived ingredient provides at least 20%, preferably at least 30%, more preferably at least 40% and most preferably at least 50% by weight of the viscous dairy component.

The viscous dairy component may be a fermented milk product, for example a yoghurt or a fresh cheese. It may also be a flan base, a cream, a mousse, for example. Preferably, the composite dairy product of the invention is a chilled dairy product, that is, a product stored at a chilled temperature, for example 8°C or lower, preferably 6°C or lower, for example at 5 or 4°C or lower. Of course, if the composite dairy product is an ice-cream, it is stored at 0°C or lower. These storage temperatures relate to the storage of the product before being commercially obtained by an end consumer. Generally, the end consumer is advised to store the product under the same chilled conditions until consumption, for example in a refrigerator.

The viscous dairy component may have a white or whitish, beige or generally a fair and/or bright colour. The whitish colour, which preferably can be perceived through a transparent portion of the serving container, allows association of this component of the composite product with milk and hence, with a dairy product. Furthermore, the use of a whitish viscous component allows for a clear contrast with a further viscous component, for example a coloured dairy component and/or a coloured non-dairy component.

A "viscous non-dairy component", which may be used in the context of the present invention may be free of any dairy ingredient or may contain milk or a milk-derived ingredient to a minor content only. For the purpose of the present invention, the term non-dairy component encompasses, for example, a sauce, like for example chocolate or caramel sauce, and a fruit containing ingredient, such as fruit puree, a compote, fruit pulp, fruit syrup, fruit flavoured liquid, semi-liquid or jelly. A non-dairy component, if present, may be selected from the group of the above-mentioned ingredients including mixtures of two or more of these. In general, the non-dairy component is coloured, wherein the colour allows association with the nature of the component. For example, the non-dairy component may be a brown chocolate sauce, a red strawberry or raspberry puree, a yellow apricot puree or compote, and so on.

The non-dairy component, as well as the dairy component may comprise individual pieces, such as fruits, chocolate, coconut and/or caramel pieces, broken M&Ms, and so forth.

A common feature of all components is that they need to have a certain viscosity, which is why these components are referred to herein as "viscous components". In the case of the viscous dairy component, the viscosity is in the range of 8'000 to 100'000cPs, more preferably 9'000 to 90'000cPs, even more preferably 10'000 to 85'000cPs, and most preferably, 20'000 to 80'000cPs.

For example, typical stirred yoghurt has a viscosity of about 40'000, a thick vanilla dessert cream has a viscosity of about 80'000, and a fresh cheese preparation has a viscosity of about 70'000-80'000.

The viscous non-dairy component may have, for example, a viscosity in the range of 4'000cPs to 20'000cPs, preferably 4'500 to 15'000cPs, more preferably 4'000 to 10'000cPs, and most preferably 4'500 to 8'000cPs.

Viscosities are determined with a Brookfield viscosimeter, spindle 06 (b), and 5 rpm at 8°C. Following filling of a sample component (not co-filled for the purpose of viscosity measurement), the component is stored for 24 hours at 8°C before viscosity is determined.

The consistency of the dairy base at 20°C measured according to Bostwick for 1 minute may be in the range of 3 to 9, preferably 4 to 7, and for an optional non-dairy component in the range of 5 to 15, preferably 9 to 11.

Accordingly, the composite product comprises two or more, for example three, four, five or more viscous components, with at least two but possibly each one different from the other. According to an embodiment, the composite product comprises two different viscous components.

The present invention thus encompasses a large variety of composite dairy products including ice-creams. For example, the composite dairy product may comprise two, for example a first and a second, co-filled viscous components, both being either dairy components or one being a dairy component and the other being a non-dairy component as defined above. Of course, the composite dairy product may comprise more than two co-filled components, for example three dairy components, or two dairy components and a non-dairy component, or one dairy component and two non-dairy components. According to another embodiment, the composite dairy product of the invention has four co-filled components, for example one dairy and three non-dairy, two dairy and three non-dairy, three dairy and one non-dairy component, or four dairy components. Of course, composite dairy products with five, six, seven, eight, nine, ten or more co-filled may be produced in accordance with the invention.

The composite dairy product may also comprise further components that are not co-filled but are, for example, filled before and/or after a co-filling step, and, therefore, are not specifically detailed herein. Such further components may be dairy or non-dairy. Such further components are not required to be viscous, although they may be. Further components can be, for example, particulate. An example for a further component is a thin layer of solid chocolate provided on top of the composite product of the invention.

The composite dairy product of the invention comprises at least two co-filled components, wherein "co-filled" or "co-filling" means that at least part, preferably at least 50wt.%, preferably at least 70wt% of each of the co-filled components are filled at the same time, that is, simultaneously, into the pot. Another, not co-filled component may provide a bottom or a topping on the composite product of the invention, for example, a layer of a chocolate sauce or of a biscuit layer on the bottom or on the top, for example. Preferably, a nozzle is used for achieving the co-filling as will described further below, having separate channels and openings for the different components to be co-filled.

Preferably, the composite product is a bottom-up filled product. The principle of bottom-up filling is detailed further below.

Preferably, the composite dairy product of the invention comprises a container comprising at least one transparent portion. The transparent portion in said container may be obtained, for example, by using a container having a portion of glass or transparent plastic. The transparent portion is preferably located in a lateral wall of the container, but may, of course, also be provided in bottom wall portions and/or in the lid. The transparent portion is preferably sufficiently large so as to enable a visual inspection of the dairy product and, more particularly, of the at least two, but, if applicable, of the more than two of the different components of the composite product.

The present invention is not restricted with respect to the shape of the container. The container may have an ashlar, cuboid, cylindrical or slightly conical shape, for example. For example, the container may have the form of a truncated cone. Preferably, the container comprises a lid on top, which may be transparent, but does not need to be and generally is not. Preferably, the transparent portion is located on a lateral and/or sidewall of the container. In this way, the consumer can see the product components when the containers are stacked one above the other in a shelf. Of course, several transparent portions may be provided, such as two, three, four, five, six or more separate transparent portion. According to an embodiment, the container is made of a transparent glass or plastic container containing a lid, wherein the lateral sides of the container are only partially covered by a product label containing a communication to the consumer, for example photographs, a drawing and/or product information.

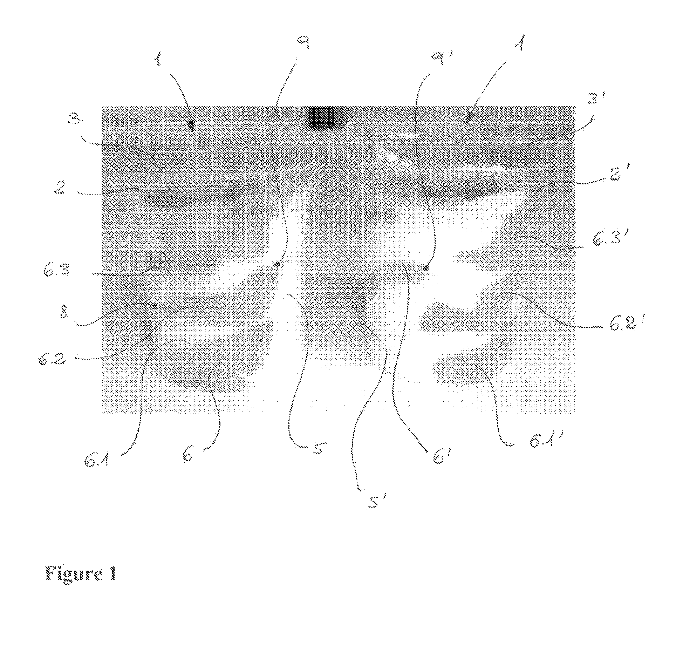

An example of a composite dairy product of the invention is shown for the purpose of illustration in **Figure 1****.** In Figure 1, reference numbers 1 and 1' indicates two composite dairy products, each provided in a transparent plastic pot 2, 2', and sealed with an aluminium lid 3, 3'. The two composite products have identical ingredients and components and are provided in identical containers, which is why the singular will be used herein also when referring to both composite products 1 and 1'. The plastic pot 2, 2' is transparent and thus discovers to a consumer the composite content of the dairy product. In particular, a first component 5, 5' can be seen at the lateral surface of each container. Due to its white colour, a consumer can identify components 5, 5' as a dairy component. It can also be seen that component 5, 5' is the most voluminous component of all components. From a rough estimation, a consumer would say that the dairy component provides 50% or more of the filled volume of the container.

A second component 6, 6' can be seen through the transparent wall of the containers of the two composite dairy products 1, 1'. The second component 6, 6' has a different colour than the first component 5, 5', and therefore forms an entity optically contrasting from the first component. The second component is coloured, that is, has a yellow colour. From the yellow colour, a consumer can say that the second component is a fruit component, for example an apricot puree or apricot compote. Accordingly, in the example shown in Figure 1, the second component 6, 6' is a non-dairy component.

The second component appears and/or is seen on the surface of the transparent portion of the container as a plurality of discontinuous stretches, indicated with reference numbers 6.1, 6.2 and 6.3 and 6.1', 6.2' and 6.3' with respect to the two products 1, 1', respectively. While the present invention also encompasses a composite dairy product comprising only one discontinuous stretch, the embodiment shown in Figure 1 shows a plurality of such discontinuous stretches.

It is also apparent that the stretches of the second component are irregular. In particular, the different stretches 6.1-6.3 and 6.1'-6.3' all have different contours on the transparent portion of the surface of the container. Furthermore, the contours of each stretch on the transparent surface of the container are irregular, snatchy as such. The stretches cannot easily be attributed to a standard geometrical form. For this reason, the product as a whole does not give the impression of being industrially produced, but one could think that a confectioner had filled the components by hand, as if the confectioner had moved a piping bag with the viscous components manually. Since some consumers consider many prior art composite dairy products as too industrial, the irregular and/or snatchy appearance of one or more of the components on the outer surface of transparent wall portion is considered an advantage.

The expression "substantially discontinuous" does not exclude the situation where individual stretches, when seen on the surface of the transparent containers are in contact with each other, for example touch each other slightly, that is, are not entirely separated by another component, for example the first component. Contacts between the stretches arise from the fact that the stretches are irregular. For example, in Figure 1, it can be seen that stretches 6.1' and 6.2' of the product 1' touch or nearly touch each other. Similarly the stretches 6.1 and 6.2 of the composite dairy product 1 in Figure 1 are at some point on the surface of the transparent container 1 only separated by a very thin separation of the other component, the dairy component. A continuity created by contacts of the irregular shape of otherwise distinct stretches is also encompassed within the terms "discontinuous stretch" and "substantially discontinuous stretch". Accordingly, discontinuous stretches are stretches that are considered, when regarded by a consumer as individual pockets of the respective component within one or more other components, for example within a main component, the main component being the component that provides more volume than any other component. Preferably, a "discontinuous stretch" for the purpose of the present invention, is in contact with another, neighbouring discontinuous stretch on less than 30%, less than 20%, preferably less than 10% and most preferably less than 5% of the circumference of the discontinuous stretch on the surface of the transparent container.

Although the stretches 6.1-6.3 and 6.1'-6.3' have irregular contours on the surface of the transparent container 2, 2', they seem to be inclined. When considering each stretch from left to right, an up-ward direction can be recognised. In other words, the stretches are not horizontally arranged. Stretch 6.2 in the product 1 can be overseen entirely in Figure 1, and a starting point 8 constituted by the left end of the stretch can be identified, as well as a right end point 9, constituted by the right end of the stretch 6.2. The starting and end points 8 and 9, respectively, are not only horizontally offset, but also vertically displaced, in that end point 9 is at a higher position from the bottom of the container than starting point 8. The orientation of the stretches as visible on the surface of the transparent container is a consequence of a spiral-like filling method. For this reason, the composite dairy product shown in Figure 1 is considered as a spiral-filled composite product, or a product belonging to the spiral or spiral-like type.

According to an embodiment, at least one, but preferably two or more, for example all co-filled viscous components extend substantially from the bottom to the top of the container. For example, a first and a second co-filled component extend together from the bottom to the top of the container, preferably in a spiral-like manner as described above.

The composite dairy product of the present invention may contain one, two, three, four, five, six, seven, eight, nine, ten or more discontinuous stretches on the surface of the container. Preferably, the composite dairy product has at least two, preferably at least three, even more preferably at least four discontinuous stretches. Preferably, some or all of these stretches are visible on the surface of the transparent container. For example, some of the discontinuous stretches, and, if applicable, a continuous main component, are visible on a transparent portion of the container.

Furthermore, in accordance with an embodiment of the invention, the composite dairy product of the invention, two, preferably at least three, for example 2, 3, 4, 5, 6 or more of said plurality of discontinuous stretches visible on the surface of the transparent container are situated one above the other. In Figure 1, stretches 6.1-6.3 and 6.1'-6.3' are substantially vertically one above the other, in a substantially parallel vertically displaced manner.

According to another embodiment, two groups of two or more substantially discontinuous stretches are situated on opposite side at the wall on the transparent surface of the container. In Figure 1 it is not directly recognizable that for each group of discontinuous stretches 6.1-6.3 and 6.1'-6.3' situated one vertically above the other as visible on one side of the transparent container, there is a further group on the opposed side of the container. The composite dairy product 1' in Figure 1 is, however, rotated to some extent with respect to product 1, and, as a consequence, towards the left side of the surface of the transparent container 2', the end points (for example end point 9') of stretches on the side opposed to the side of stretches 6.1'-6.3' can be seen.

According to another embodiment, three groups of one, two or more discontinuous stretches are situated at angles of 120° with respect to the central, vertical axis of the container, resulting in a rotational symmetrical aspect of the components on the transparent surface of the container, having three axis of symmetry. Rotational symmetry with four, five or more axis of symmetry are also encompassed by the present invention. Of course, the symmetry referred to herein is not perfect, due to the irregular, snatchy aspect of the different components on the surface of the transparent portion of the container. Still, the respective symmetry can be recognized, for example by the skilled person.

According to an embodiment of the composite product of the present invention, said at least two viscous components have different colours and wherein said container has at least one transparent wall portion, and wherein in said step of co-filling, said at least two viscous components are co-filled such that at least one of said two viscous components becomes visible, on said transparent wall portion, as an interrupted stretch of said viscous component at least partially surrounded by the at least one other viscous component. Accordingly, although at least one component, for example a second component and/or for example a non-dairy component, may be visible as a discontinuous, interrupted stretch, said component is actually continuously filled into the container but the continuity is not visible through the transparent container. This effect may be obtained by a movement of the nozzle during filling, said movement having a horizontal component of movement. Further detail on the movement necessary to obtain the product aspect as described above will be provided further below, with respect to the method of preparing and/or co-filling a composite dairy product.

The composite dairy product of the invention can be obtained by the method of preparing a composite dairy product of the invention and/or by the method of filling continuously containers with a dairy product. Preferably, the method of filling continuously containers is an industrial method, where filling is accomplished in an automated process by a filling station or a filling apparatus. The filling station is preferably programmable and/or programmed to perform the filling in a predetermined manner.

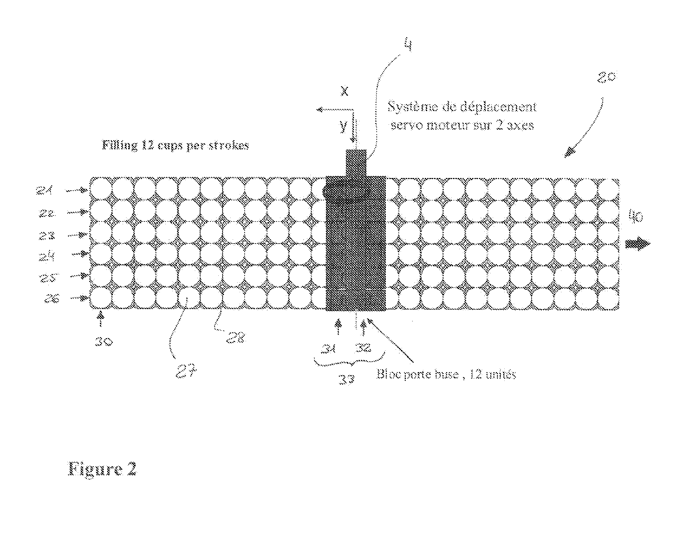

The method comprises the step of providing a line of containers to be filled. **Figure 2** schematically illustrates a production line, where reference numbers 21-26 relate to lines of containers to be filled. In each line 21-26, containers 27 are stabilized and transported by holders 28 one behind (or in front of) the other in the direction indicated by arrow 40.

According to an embodiment, the production line comprises a plurality of lanes of containers. In Figure 2, for example, six such lanes, 21-26, are provided. In this ways, rows 30 are formed, each row comprising side-by-side arranged containers of the lanes of containers. All containers of a row are generally transported together. They are thus generally at the same relative position with respect to the filling station 33. A row of containers is transported in a direction (arrow 40) that is generally substantially perpendicular with respect to the direction of the row, while the direction of transportation coincides with the direction of a lane of containers. A production line may comprise 1-24 lanes, that is, 1-24 side-by-side disposed holders for holding and transporting containers, for example, which means rows of 1-24 cup-holders. For example, a production line may comprise 2-20, 4-16, 6-12 transport lanes. Generally, a production line contains an even number of lanes.

The number of lanes corresponds to the number of holders and/or containers of a row. Generally, the containers of 1-5, preferably 1-4, for example two consecutive rows are all filled simultaneously. They generally are at the same point in the production process. Therefore, the number of lanes of a production line also corresponds to the number of nozzles.

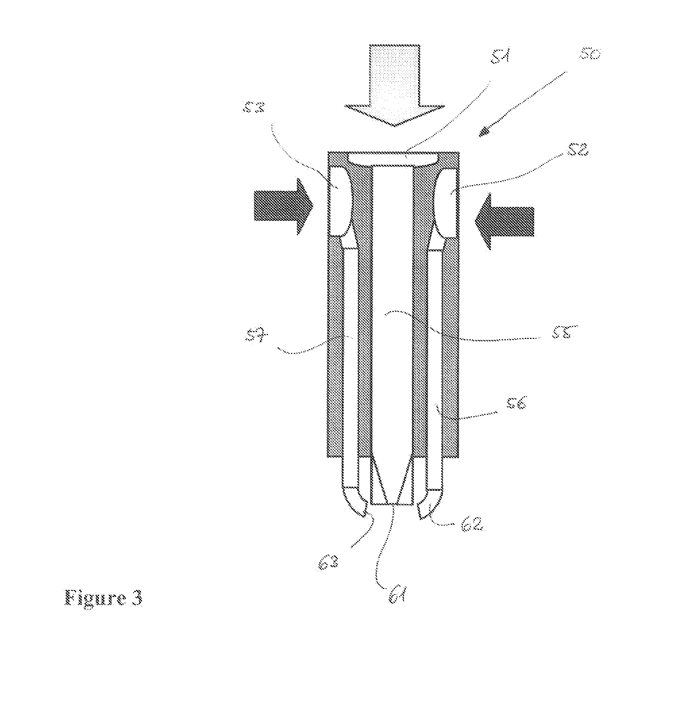

The method of the present invention provides the step of providing a nozzle, wherein said nozzle comprises at least two openings so as to allow for co-filling of at least two different viscous components into a container. A typical nozzle for co-filling is shown for the purpose of illustration in **Figure 3****.** The nozzle has at least two inlet and outlet openings. In the embodiment shown in Figure 3, the nozzle 50 is shown in a length trans-sectional view, thereby showing, at the top, three inlet openings 51, 52 and 53, one of which being a main inlet opening 51 having a central position, and two secondary inlet openings 52 and 53 arranged laterally at the top of the nozzle 50. The inlets 51-53 continue as substantially vertical channels 55-57 inside the nozzle, and led to outlet openings 61-63. It can be seen that the central channel 55 and opening 61 are larger than any one of the two lateral channels and openings, respectively, reflecting the fact that through the larger channel, generally more of a viscous component can be injected into a container, when operating with the same flow speed. The nozzle 50 of Figure 3 is an example of a nozzle suitable for co-filling at least two, but possibly three different viscous components through the three separate channels and openings into a container.

The present invention further comprises the step of guiding a container in a filling relationship of a nozzle and/or of guiding a container into vicinity of a container. Generally, a container is guided vertically below a nozzle. Furthermore, the nozzle itself is generally oriented substantially vertically. In this way, when a viscous component pushed by way of a forced product flow, for example by the aid of a piston pump system, for example with servo drive motion, through an opening of the nozzle, it is generally guided by gravitational force into the container.

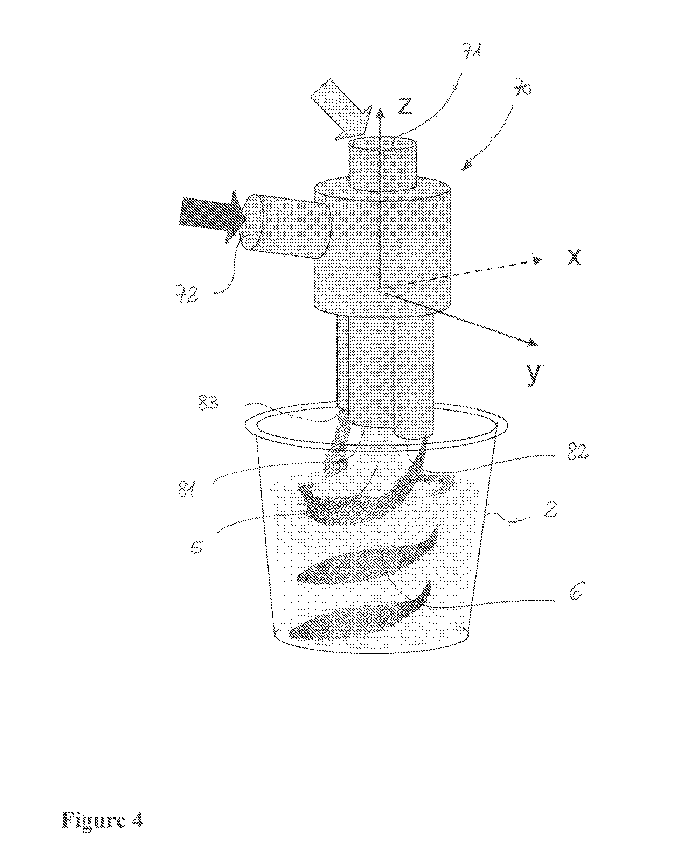

In **Figure 4****,** a nozzle 70 and a container 2 are schematically shown for illustration during the filling process, with the nozzle being situated vertically above the container. The nozzle 70 of Figure 4 differs from the nozzle 50 of Figure 3 in that nozzle 70 only has two inlets 71, 72 for two different viscous components, but also three outlet openings 81-83. Actually, inlet 72 leads into a branching channel, with each of the two branches guiding vertically down to openings 82 and 82. As with nozzle 50 of Figure 3, nozzle 70 has two lateral openings, 82, 83, situated at opposed lateral positions with respect to a central opening 81.

In Figure 4, a component having a clear, whitish colour is a viscous dairy component 5, injected through the central opening 81 of nozzle 70, and a second component 6 has a darker colour illustrating a coloured dairy or a non-dairy component, for example a fruit base, injected through two lateral openings 82 and 83 into the container.

The methods of the present invention comprise the step of co-filling at least two different components through said at least two openings of said nozzle into the container; wherein, during co-filling, at least one relative movement between the container and the nozzle is conducted. The step of co-filling is illustrated in Figure 4, where a first component 5 and a second component 6 are co-filled into the container 2. In this exemplary embodiment, the first component is injected through the central opening 81, whereas the second component 6 is injected through the two lateral openings 82 and 83. During co-filling, that is, at the same time while filling at least one relative movement between the container and the nozzle is conducted.

The nature of these relative movements is further discussed below. Before that, however, it is noted that the relative movement may be brought about by moving the nozzle while keeping the container unmoved, or by moving the container and leaving the container un-moved, or by moving both, the container and the nozzle. Since the relative movement has at least two components of movements when seen in a three-dimensional space, it is in particular possible to have one movement performed by the container and another movement being performed by moving the nozzle.

Accordingly, the relative movement has a vertical component of movement, said vertical component of movement being obtained by a movement starting from a first position where said nozzle is in a more proximal position with respect to a bottom of said container and ending in a second position where the nozzle is in a more distant position above the bottom of the container. This component of movement relates to the typical bottom-up filling of viscous components in dairy products as mentioned above. It can be achieved by raising the nozzle or by lowering the container during filling, or by doing both. In Figure 4, the vertical component of movement can be seen as a movement relative to the vertical axis z, axis z being the longitudinal axis of the nozzle 70. This component of movement may be a linear movement, meaning that the movement, if projected into a vertical plane, has, a constant speed when only the vertical direction is considered. Of course, it is also possible that the filling apparatus may be programmed so as to apply a non-linear vertical speed.

The at least one relative movement between the nozzle and the container according to the method of the invention also has a horizontal component of movement, said horizontal component of movement being obtained by a movement wherein the relative position of the nozzle with respect to the container is changed by displacement of the nozzle and/or the container.

Preferably, the relative position of an axis z of the nozzle with respect to an axis c of the container is changed by displacement of the nozzle.

Preferably, the relative position of the nozzle with respect to the container is changed by substantially parallel displacement of the nozzle and/or the container.

Even more preferably, the relative position of an axis z of the nozzle with respect to an axis c of the container is changed by substantially parallel displacement of the axis z of the nozzle and/or of the axis c of the container. Preferably, the position of the nozzle is changed in a horizontal plane defined by perpendicular axis x and y as defined further below.

In other words, there is a movement of the nozzle relative to the container during co-filling, wherein the position of the nozzle as a whole moves in a horizontal direction with respect to the container as a whole.

It is important to differentiate this kind of movement from a rotational movement of the nozzle or of the container, wherein the nozzle or the container rotate around their central axis. The present invention does preferably not concern such a rotational movement. This does not mean that such a rotational movement, which is known from the state of the art, is excluded from the scope of the present invention, it just means that the movement the present inventors specifically describe here is not a rotational movement. It is also important to note that the horizontal movement referred to herein is a relative simple displacement movement, which is technically easier, that is, less complex, to achieve in co-filling nozzles than a rotational movement. According to a preferred embodiment of the present invention, the nozzle cannot perform a rotational movement around its own axis.

The horizontal component of movement according to the invention is a movement that has at least one movement component selected from a forward, backward and lateral movement of the nozzle relative to the container being filled. Forward, for the purpose of the present invention, relates to the direction advancement of the containers to be filled on the production line, and is indicated by arrow 40 in Figure 2. Backward is the opposite direction and lateral is a movement to the right or left with respect to forward. The horizontal component of movement preferably is a combination of lateral, forward and backward relative movements.

The horizontal component of movement is a movement that is registered on a horizontal plane. In Figure 4, the horizontal plane with perpendicular axis x and y is shown. The horizontal component of movement is a movement that changes the x and/or y value of the moving object, that is, the nozzle or the container. In Figure 4, axis z is the vertical axis of an x, y, z coordinate system, and z coincides (is co-axial with) the vertical axis of the nozzle as shown in the embodiment of Figure 4. Hereinafter, axis z is considered to be the axis of the nozzle and can thus move (and/or the container can be moved) so that the values of the x, y coordinates change, assuming that the axis x and y remain fixed in space.

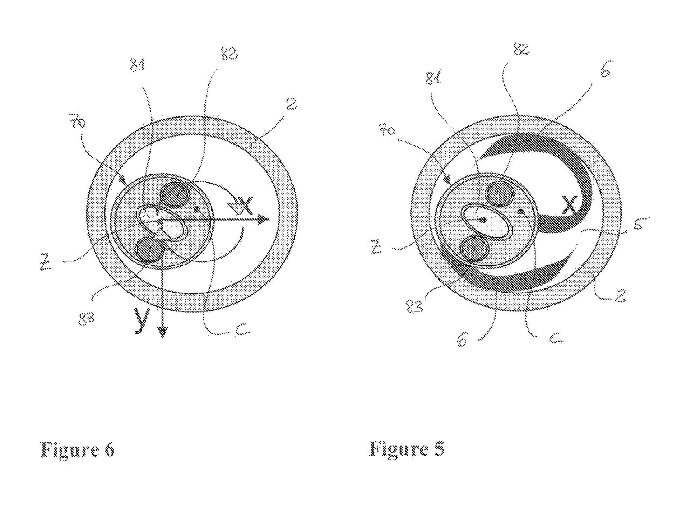

With respect to the horizontal component of movement, the axis z of the nozzle or the axis c of the container can be used as reference points. In the x, y plane these axis appear as points (see Figures 5 and 6 below). Accordingly, during co-filling, either the position of the axis z of the nozzle, or of the axis c of the container changes in the x, y coordinate system. It is also possible that the position of both change, but not in a way that the relative position of axis z and axis c (points z and c) remains unchanged. The relative position has to change.

According to an embodiment of the present invention, said horizontal component of movement, when projected into a horizontal plane x, y preferably perpendicular to said axis z, designs at least one curve.

According to an embodiment of the present invention, said horizontal component of movement, when projected into a horizontal plane x, y preferably perpendicular to said axis z, designs a closed shape, for example a circular shape and/or the shape of an "8". For example when projected into a horizontal plane, said closed shape is a circle or an ellipse.

According to a further embodiment of the present invention, said movement of said nozzle by said parallel displacement of said axis z, when projected into a plane x, y perpendicular to said axis z, is such that the nozzle is repetitively moved, during the step of co-filling, in vicinity of a lateral wall of said container and away from said lateral wall of said container.

The horizontal component of movement between the container and the nozzle can best be illustrated in a horizontal plane, with y and x being the two axis of said horizontal plane.
**Figures 5 and 6** are cross-sections made at the position z=0 in the coordinate system shown in Figure 4. Figures 5 and 6 thus show the nozzle 70 in a cross-section, with outlet openings 81-83 and the container 2 seen from above. In these cross-sections, the central longitudinal axis of the nozzle (axis z) and of the container (axis c) appear as points z and c, respectively. During filling, the relative position between these axis changes.

In Figure 5, the dairy component 5, and the non-dairy component 6 are shown, the non-dairy component appearing as a curved stretch 6 within the dairy component 5. It can be seen that the non-dairy component has a portion (stretch) in vicinity of the lateral container wall and then moves in a curve inwardly, towards the centre of the container, following the movement of the nozzle.

In Figure 6, the viscous components are omitted, but arrows indicate the movement of the nozzle with respect to the container. It can be seen that the nozzle moves in a closed movement reminding, when seen in the plane x, y, of an ellipse.

Preferably, during the horizontal component of movement of the relative movement between the nozzle and the container, the nozzles is approaching the wall on a first side of the container and then moves away from the wall towards the wall on a second side of the container. Of course, the movement can be made with two, three, four or more sides of the container, with the nozzle moving close to the wall and away from it thereby moving to one side after the other. The movement to the wall and away from the wall inside the container results in the discontinuous stretches of one of the components, for example of a second component, when seen on an outer surface of the transparent container. In combination with the vertical relative movement of the bottom-up filling process, this provides the spiral or spiral-like aspect as described above.

Accordingly, in an embodiment of the methods of the present invention, said at least two viscous components have different colours and wherein said container has at least one transparent wall portion, and wherein in said step of co-filling, said at least two viscous components are co-filled such that at least one of said two viscous components becomes visible, on said transparent wall portion, as an interrupted stretch of said viscous component at least partially surrounded by the at least one other viscous component.

An apparatus for performing the methods of the present invention is schematically illustrated in Figure 2. The apparatus preferably comprises a plurality of n, side-by-side arranged nozzles, wherein n is 2 or an integer >2, said apparatus further comprising side-by-side arranged holders for holding a row of containers in a filling relationship with respect to said nozzles. Nozzles useful for the apparatus are shown in Figures 2 and 3. The apparatus shown in Figure 2, six side-by side arranged nozzles are provided, which are not visible in further detail because they are hidden, in the top-down view of Figure 2, by a connection structure 4, to which said nozzles are detachably fixed. Actually, the connection structure 4 carries twelve nozzles, whereby two rows of six nozzles are provided one after the other below connection structure 4.

According to an embodiment, the apparatus according to invention comprises one central and at least two lateral openings, wherein said first component is filled into the container through said central opening and wherein said second component is co-filled through said at least one of said lateral openings.

According to an embodiment, the apparatus of the invention comprises a connecting structure to which said nozzles are attached, wherein said connection structure performs said horizontal component of movement by displacing in parallel said axis z of each nozzle. This is again illustrated in Figure 2, where axis x and y have the same meaning as above and wherein the connection structure as a whole is moved in the plane x,y, thereby displacing the vertical axis z of the nozzles. Of course, it would as well be possible to displace the containers of rows 31 and 32 in the horizontal plane x, y, and keeping the nozzles fix with the same result.

According to an embodiment of the apparatus, all relative movements of the nozzles relative to the respective container filled by the nozzle during the co-filling are mediated by corresponding movement of said connecting structure. In other words, all movements which are brought about by movement of the nozzles and not of the container is provided by movement of the connection structure, thus moving all nozzle simultaneously and preferably synchronously in a corresponding relative movement.

According to an embodiment of the apparatus of the invention said nozzles are rigidly connected to said connecting structure during operation of said apparatus.

According to an embodiment, the apparatus of the invention comprises a motor, for example a single motor that coordinates all parallel displacement movements of said nozzle, that is the horizontal component of movement.

According to an embodiment, said horizontal component of movement is obtained by a motor connected to an eccentric. For example, the eccentric is then connected to a connecting structure as the connection structure 4 in Figure 2 discussed above. The same motor or another motor can be connected to a further eccentric having an axis that is situated at an angle of 90° with respect to the axis of the first eccentric mentioned above. By using two eccentrics, a circular movement of the nozzle, or, if applicable, of a connecting structure may be obtained, thereby moving a plurality of nozzles in a row.

According to an embodiment, the nozzle comprises one central and at least two lateral openings, wherein a first viscous component can be filled through said central opening and a second viscous component can be filled through said lateral openings in said nozzle.

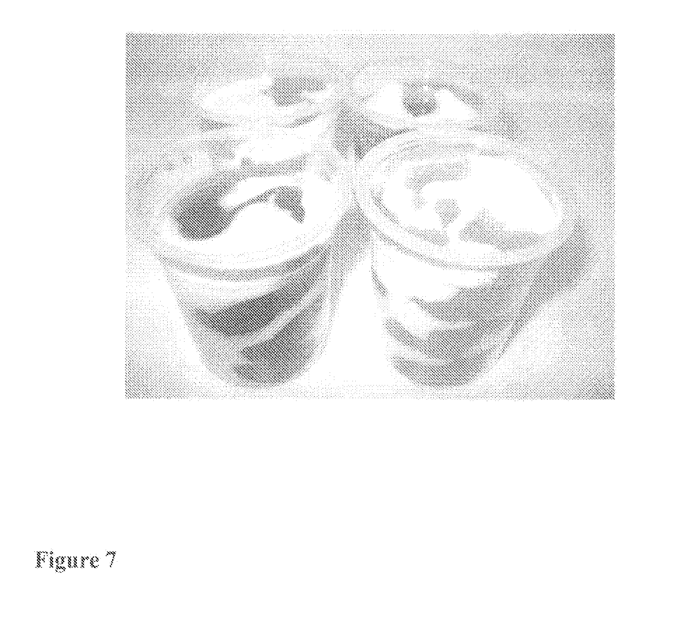

The filling apparatus as described hereinabove has the advantage of technical simplicity in comparison while achieving a spiral or spiral-like arrangement of different viscous components in a composite dairy product. This entails further advantages linked to product hygiene, reduced maintenance efforts, better filling efficiency because of less interruptions due to failures, and so forth. Furthermore, surprisingly, a non-industrially-looking product aspect is obtained, as can be seen in Figure 7, where four different products are juxtaposed, all of them having a different across the transparent container, with discontinuous stretches of irregular, different shape.

## Claims

1. A method for continuously filling containers with a dairy product, the method comprising the steps of:
- providing a line of containers to be filled;
- providing a nozzle, wherein said nozzle comprises at least two openings so as to allow for co-filling of at least two different viscous components into a container;
- guiding a container in vicinity of the nozzle;
- co-filling at least two different components through said at least two openings of said nozzle into the container; wherein, during co-filling, at least one relative movement between the container and the nozzle is conducted, said at least one relative movement comprising:
- a vertical component of movement, said vertical component of movement being obtained by a movement starting from a first position where said nozzle is in a more proximal position with respect to a bottom of said container and ending in a second position where the nozzle is in a more distant position above the bottom of the container;
- a horizontal component of movement, said horizontal component of movement being obtained by a movement wherein the relative position of an axis z of the nozzle with respect to an axis c of the container is changed by displacement of at least one of said axis.

2. The method of claim 1, wherein the method comprises the steps of:
- providing rows and lines of containers to be filled;
- providing a row of side-by-side arranged nozzles, wherein each nozzle comprises at least two openings so as to allow for co-filling of two different viscous components into an individual container;
- guiding a row of containers in vicinity of a row of said side-by-side arranged nozzles;
- co-filling at least two different viscous components through said at least two openings of each nozzle into each container of a row; wherein, during co-filling, at least one relative movement between each container and the respective nozzle is conducted, said at least one relative movement comprising:
- a vertical component of movement, said vertical component of movement being obtained by a movement starting from a first position where each nozzle is in a more proximal position with respect to a bottom of said respective container and ending in a second position where each nozzle is in a more distant position above the bottom of the respective container;
- a horizontal component of movement, said horizontal component of movement being obtained by a movement wherein the relative position of an axis z of each nozzle with respect to an axis c of each respective container is changed by displacement of at least one of said axis.

3. The method of any one of claims 1 or 2, wherein said horizontal component of movement during co-filling is selected from a forward, a backward, a lateral component of movement and combinations of two or more the aforementioned

4. The method of any one of the preceding claims, wherein said horizontal component of movement, when projected into a horizontal plane x, y preferably perpendicular to said axis z, is a movement in at least one direction on said plane x, z.

5. The method of any one of the preceding claims, wherein said horizontal component of movement, when projected into a horizontal plane x, y preferably perpendicular to said axis z, designs at least one curve.

6. The method of any one of the preceding claims, wherein said horizontal component of movement, when projected into a horizontal plane x, y preferably perpendicular to said axis z, designs a closed shape, in particular a circle or an ellipse.

7. The method of any one of the preceding claims, wherein said movement of said nozzle by said parallel displacement of said axis z, when projected into a plane x, y perpendicular to said axis z, is such that the nozzle is repetitively moved, during the step of co-filling, in vicinity of a lateral wall of said container and away from said lateral wall of said container.

8. The method of any one of the preceding claims, wherein said at least two viscous components have different colours and wherein said container has at least one transparent wall portion, and wherein in said step of co-filling, said at least two viscous components are co-filled such that at least one of said two viscous components becomes visible, on said transparent wall portion, as an interrupted stretch of said viscous component at least partially surrounded by the at least one other viscous component.

9. The method of any one of the preceding claims, wherein said at least two viscous components comprise one dairy viscous component and one non-dairy viscous component.

10. The method of any one of the preceding claims, wherein said nozzle comprises three openings, a central opening for co-filling a dairy viscous component into the container, and two lateral openings for co-filling a non-dairy viscous component into the container.

11. A composite dairy product comprising at least a first and a second viscous component, said first and second viscous component having different colours, wherein said first viscous component is a dairy viscous component and said second viscous component is selected from dairy viscous components and a non-dairy viscous component, wherein said composite dairy product comprises a container comprising at least one transparent portion, and wherein said second viscous component is visible as a substantially discontinuous stretch on said transparent portion of the container.

12. The composite dairy product of claim 11, wherein said second component is visible as a plurality of substantially discontinuous stretches on said transparent portion of said container, wherein at least two, preferably at least three of said plurality of discontinuous stretches are situated one above the other.

13. The dairy product of any one of claims 11 and 12, wherein two groups of two or more substantially discontinuous stretches of said second viscous component are situated on opposed sides at the wall of the container.

14. The dairy product of any one of claims 11-13, wherein said discontinuous stretches visible on a transparent portion of said container have an irregular form on said transparent portion.

15. The dairy product of any one of claims 11-14, wherein said second viscous component is provided in said container as a least one continuous stretch of said component, which extends from a more central position in the container towards a lateral wall of said container and again towards said more central position, thereby forming on said visible transparent portion of the container said substantially discontinuous stretch.

16. The dairy product of claim 15, wherein said second viscous component further extends substantially from the bottom to the top of said container together with said first viscous component.

17. An apparatus for co-filling two edible viscous components into a container for providing a composite dairy product, wherein said apparatus comprises at least one nozzle comprising at least two openings for simultaneously co-filling said two viscous components through said nozzle into said container, said apparatus further comprising a line for guiding a line of containers to be filled in a filling relationship with respect to said nozzle, wherein said apparatus is arranged so as to perform at least one relative movement between the container and the nozzle during co-filling of said two viscous components, said at least one relative movement comprising:
- a vertical component of movement, said vertical component of movement being obtained by a movement starting from a first position where said nozzle is in a more proximal position with respect to a bottom of said container and said movement ending in a second position where the nozzle is in a more distant position above the bottom of the container;
- a horizontal component of movement, said horizontal component of movement being obtained by a movement wherein the relative position of an axis z of the nozzle with respect to an axis of the container is changed by substantially parallel displacement.

18. The apparatus of claim 17, comprising a plurality of n, side-by-side arranged nozzles, wherein n is 2 or an integer >2, said apparatus further comprising side-by-side arranged holders for holding a row of containers in a filling relationship with respect to said nozzles.

19. The apparatus of claim 18, comprising a connecting structure to which said nozzles are attached, wherein said connection structure performs said horizontal component of movement by displacing in parallel said axis z of each nozzle.

20. The apparatus of claim 19, wherein all movements of the nozzles relative to the respective container filled by the nozzle during the co-filling is mediated by corresponding movement of said connecting structure.

21. The apparatus of any one of claims 19 and 20, wherein said nozzles are rigidly connected to said connecting structure during operation of said apparatus.

22. The apparatus of any one of claims 17-21, comprising a single motor that coordinates all parallel displacement movements of said nozzle.

23. The apparatus according to any one of claims 17-22, wherein the nozzle comprises one central and at least two lateral openings, wherein a first viscous component can be filled through said central opening and a second viscous component can be filled through said lateral openings in said nozzle.

24. The method of any one of claims 1-10, wherein said displacement of at least one of said axis is a parallel displacement of said axis.
